# EUROPEAN PATENT APPLICATION

(11) **EP 4 733 648 A1**
(43) Date of publication of application: **29.04.2026**
(21) Application number: 25726004.2
(22) Date of filing: 02.04.2025
(51) Int. Cl.: F16L 37/086, F16L 25/06, F16L 37/12

(54) **QUICK-CONNECT EQUAL-DIAMETER STRAIGHT CONNECTOR STRUCTURE AND USE METHOD THEREFOR**

(30) Priority: 23.08.2024 CN 202411162810
(71) Applicant: Nantong Triflo Valve Co., Ltd., Nantong, Jiangsu 226145 (CN)
(72) Inventor: LIANG, Xinyu, Nantong Jiangsu 226145 (CN); LI, Senyang, Nantong Jiangsu 226145 (CN); TANG, Wei, Nantong Jiangsu 226145 (CN)
(74) Representative: Bayramoglu et al.
(86) International application number: PCT/CN2025/086790
(87) International publication number: WO 2026/040418

(57) **Abstract**

The present invention discloses a quick-installation equal-radius straight-way joint structure and a use method thereof, including a shell I, shells II, positioning blocks, support pins, and retaining rings. The shell I is a hollow cylindrical structure arranged horizontally, and left and right side surfaces of the shell I are each concentrically provided with the hollow cylindrical shell II, which are integrally formed. The upper and lower sides of the inner circumferential surface in the shell II are coaxially provided with arc-shaped slots communicating with the interior of the shell II, the upper and lower ends of the outer circumferential surface of the shell II are screwed with the positioning blocks, and the outer surface of the positioning block is embedded with an internal threaded hole. The retaining ring is coaxially arranged in the arc-shaped slot, and a T-shaped support pin is coaxially arranged in the internal threaded hole of the positioning block. A small-diameter end of the support pin is screwed with an outer arc surface of the corresponding retaining ring along a radial direction of the shell II, and a first spring is sleeved on the small-diameter end of the support pin. After the pipeline is sleeved in the corresponding shell II, the retaining ring is clamped in the corresponding groove through the first spring. According to the present invention, the retaining ring can be clamped in the corresponding groove, so that the pipeline and the joint are connected together.

## Description

### TECHNICAL FIELD

The present invention relates to the technical field of pipeline joints, and in particular to a quick-installation equal-radius straight-way joint structure and a use method thereof.

### BACKGROUND TECHNOLOGY

As an important part of urban infrastructure construction, pipelines play the role of transmitting media. Due to the limitations of production, transportation, and installation of pipelines, it is necessary to cut the pipelines into multiple sections to facilitate transportation, and then connect multiple sections of pipelines through joints during installation.

At present, the pipes at two ends are fixed together by means of screwing, clamping, or hooping, but these fixing methods have the following disadvantages: 1) Although the screwing method can ensure the stability of the fixed connection, it can only be screwed after the screw holes are aligned, which is cumbersome and time-consuming to install and disassemble; 2) Although the clamping method is convenient and quick, the stability of its fixed connection is not high, which easily leads to looseness between the joint and the pipeline; 3) Although the hooping method is convenient, when the hoop is removed for maintenance, the hoop will be deformed and its reuse will be affected. Therefore, the above problems need to be solved urgently.

### CONTENT OF THE INVENTION

The technical problem to be solved by the present invention is to provide a quick-installation equal-radius straight-way joint structure and a use method thereof. Through the cooperation of a first spring and a retaining ring, the retaining ring can be clamped in a groove of a pipeline, thus connecting the pipeline with the joint.

In order to solve the above technical problems, the present invention adopts the following technical solutions: a quick-installation equal-radius straight-way joint structure of the present invention is innovative in that it includes a shell I, shells II, positioning blocks, support pins, first springs, and retaining rings. The shell I is a hollow cylindrical structure arranged horizontally, and left and right side surfaces of the shell I are each concentrically provided with the hollow cylindrical shell II, which are integrally formed. Arc-shaped slots are coaxially embedded in a middle position of each shell II relative to upper and lower sides of an inner circumferential surface of the shell II, and each arc-shaped slot is communicated with an interior of the corresponding shell II. The positioning blocks are respectively screwed at upper and lower ends of an outer circumferential surface of each shell II, and an internal threaded hole is vertically embedded in a middle of an outer surface of each positioning block to ensure that the internal threaded hole does not extend out of an inner surface of the corresponding positioning block. An annular groove is coaxially embedded in an outer circumferential surface of the pipeline near an end of the pipeline, and an arc-shaped retaining ring matched with the groove is coaxially arranged in each arc-shaped slot. A T-shaped support pin is coaxially and slidably sleeved in the internal threaded hole of each positioning block, a small-diameter end of each support pin extends into the corresponding arc-shaped slot along the radial direction of the shell II and is screwed and fixed with a middle position of an outer arc surface of the corresponding retaining ring. The first spring is coaxially sleeved between the positioning block and the corresponding retaining ring on the small-diameter end of each support pin, and after the pipeline is coaxially sleeved in the corresponding shell II, the retaining ring is clamped in the corresponding groove by a spring force of the first spring, thereby connecting the pipeline with the corresponding shell II.

Preferably, an inner diameter of each shell II is matched with an outer diameter of the pipeline, and an interior of each shell II is communicated with an interior of the shell I. An outer diameter of each shell II is larger than an outer diameter of the shell I, and a section of the two after integral forming is I-shaped, and then form an equal-radius straight-way structure.

Preferably, a width of each arc-shaped slot is smaller than a lateral width of the corresponding shell II, an inner diameter of each arc-shaped slot is corresponding to an inner diameter of the corresponding shell II, and an outer diameter of each arc-shaped slot is smaller than an outer diameter of the corresponding shell II.

Preferably, each positioning block has a cylindrical structure and is arranged along a radial direction of the shell II, an inner surface of each positioning block is coaxially attached with a circular boss, and each circular boss is integrally formed with the corresponding positioning block. A diameter of each circular boss is smaller than a diameter of the corresponding positioning block, and an external thread is also provided on an outer circumferential surface of each circular boss. Each positioning block is screwed and fixed with a corresponding position of an outer circumferential surface of the corresponding shell II through the boss, and it is necessary to ensure that the bosses extend into the corresponding arc-shaped slot and are respectively arranged at intervals outside the corresponding retaining ring.

Preferably, a diameter of the small-diameter end of each support pin is smaller than a diameter of the corresponding circular boss, sliding, towards a center of the corresponding shell II, of the support pin is limited by the positioning block; an outer diameter of a large-diameter end of each support pin is smaller than a diameter of the corresponding internal threaded hole, and it is necessary to ensure that the internal threaded hole does not interfere with sliding of the support pin in the corresponding positioning block along the radial direction of the shell II.

Preferably, a width of each retaining ring is matched with a diameter of the corresponding circular boss and a width of the groove of the pipeline, and it is necessary to ensure that after the positioning block is detached from the corresponding shell II, the retaining ring is detached from the corresponding shell II with the positioning block through the support pin. An inner arc surface of each retaining ring is an inner conical surface matched with the outer circumferential surface of the pipeline, a diameter of the retaining ring on a side far away from the shell I is larger than an outer diameter of the pipeline, and a diameter of the retaining ring on a side adjacent to the shell I is smaller than the outer diameter of the pipeline. When the pipeline is coaxially inserted into the corresponding shell II, the retaining ring is pushed in a direction far away from the pipeline to compress the first spring, when the groove moves with the pipeline to a position relative to the retaining ring, the retaining ring is clamped in the groove of the pipeline by the spring force of the first spring.

0011. Preferably, sealing rings matched with the pipeline are also symmetrically and coaxially sleeved inside the shell I at left and right intervals, a setting position of each sealing ring needs to ensure that an end of the pipeline is coaxially inserted into the corresponding sealing ring when the retaining ring is clamped in the groove.

Preferably, a positioning bolt is further included. The positioning bolt matched with the internal threaded hole is coaxially screwed in the internal threaded hole of each positioning block, the support pin is limited by an abutting contact of each positioning bolt with an end face of a large-diameter end of the corresponding support pin, thus ensuring that the retaining ring is always clamped in the groove of the pipeline.

A use method of the quick-installation equal-radius straight-way joint structure of the present invention is innovative in that it includes the following steps:
step 1: loosening the positioning bolt to generate a gap between the positioning bolt and the end face of the large-diameter end of the corresponding support pin and ensure that the support pin is allowed to slide within the gap;
step 2: inserting an end of the pipeline adjacent to the groove into the corresponding shell II concentrically, where the outer circumferential surface of the pipeline is subjected to contact with the inner arc surface of the corresponding retaining ring, the corresponding retaining ring is squeezed with a continuous insertion of the pipeline, and the retaining ring is subjected to move in a direction of approaching the corresponding positioning block along the radial direction of the shell II to compress the corresponding first spring;
step 3: when the end of the pipeline is coaxially inserted into the corresponding sealing ring, subjecting the groove of the pipeline to directly face the retaining ring, and subjecting, under the spring force of the first spring, the retaining ring to move in a direction of approaching the pipeline along the radial direction of the shell II and to be clamped in the groove of the pipeline, to connect the pipeline with the corresponding shell II;
step 4: tightening the positioning bolt to make the positioning bolt abut against the end face of the large-diameter end of the corresponding support pin and limit the support pin, to ensure that the retaining ring is always clamped in the groove of the pipeline; and
step 5: when the pipeline needs to be detached, loosening the positioning bolt, and then loosening the positioning block, so that the pipeline is allowed to be detached from the corresponding shell II with the positioning block; detaching the retaining ring from the corresponding shell II with the positioning block through the support pin to detach the pipeline from the corresponding shell II.

The present invention has the following beneficial effects:
(1) Through the cooperation of the first spring and the retaining ring, the retaining ring can be clamped in the groove of the pipeline, thus connecting the pipeline with the joint.
(2) The support pin is supported by tightening the positioning bolt, so that the support pin is convenient to be limited, the retaining ring is always clamped in the groove of the pipeline, and the stability of the connection between the pipeline and the joint is ensured.
(3) Through the screw connection design of the positioning block, it is convenient to detach the retaining ring from the groove of the pipeline by detaching the positioning block, so as to detach the pipeline from the joint.

### DESCRIPTION OF THE DRAWINGS

In order to illustrate the technical solution in the embodiment of the present invention more clearly, the drawings needed in the embodiment will be briefly introduced below. Obviously, the drawings in the following description are only some embodiments recorded in the present invention. For the ordinary skilled in the art, other drawings can be obtained according to these drawings without creative work.
FIG. 1 is a schematic structural diagram of a quick-installation equal-radius straight-way joint structure of the present invention.
FIG. 2 is a side view of FIG. 1.
FIG. 3 is a schematic diagram showing the state when a pipeline is in contact with a retaining ring in the present invention.
FIG. 4 is a schematic diagram showing the state when the retaining ring is clamped in the groove of the pipeline in the present invention.
FIG. 5 is a schematic diagram showing the state when a positioning bolt abuts against a support pin in the present invention.

In figures, 1-shell I; 2-shell II; 3-sealing ring; 4-retaining ring; 5-first spring; 6-support pin; 7-positioning bolt; 8-positioning block; 9-groove; 10-arc-shaped slot; 11-internal threaded hole; and 12-pipeline.

### SPECIFIC IMPLEMENTATIONS

The technical solutions of the present invention are clearly and completely described below with reference to specific implementations.

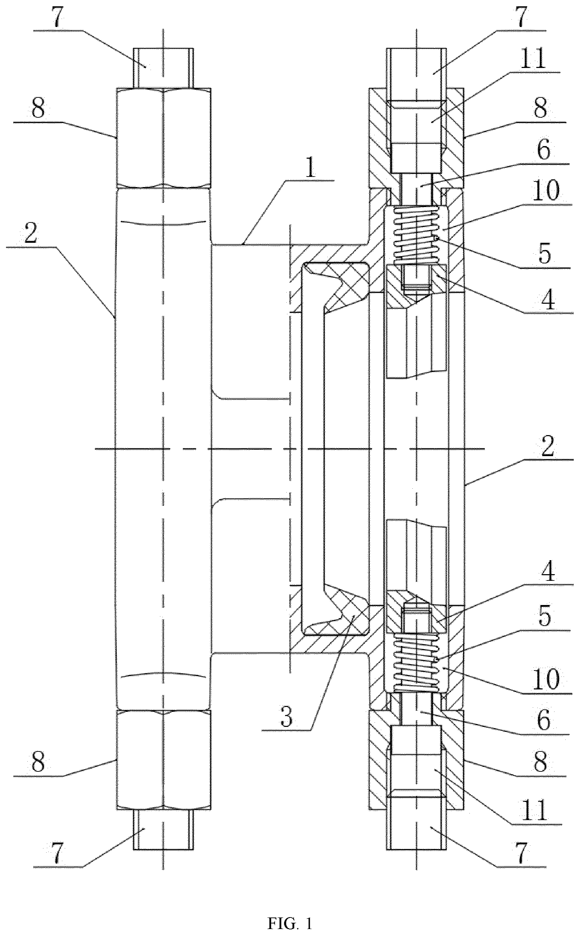

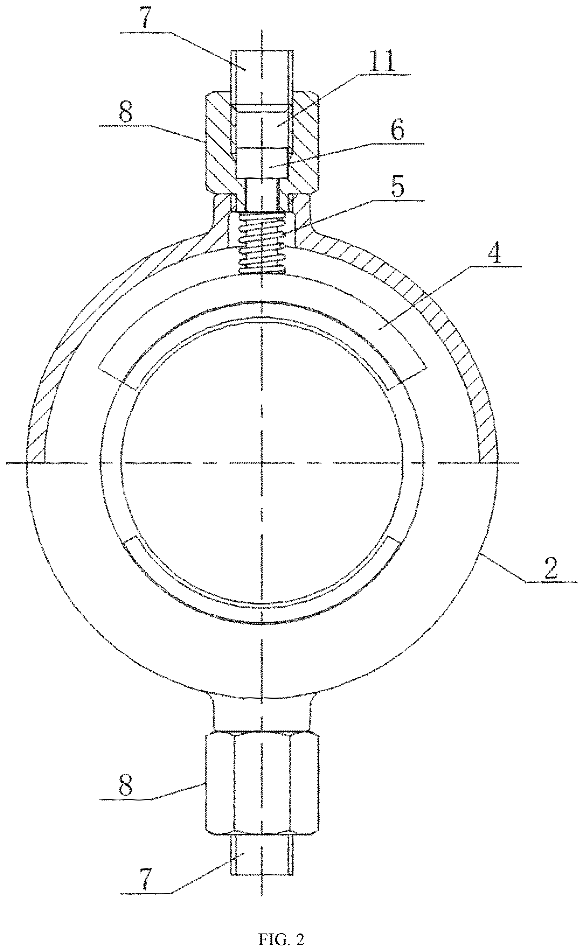

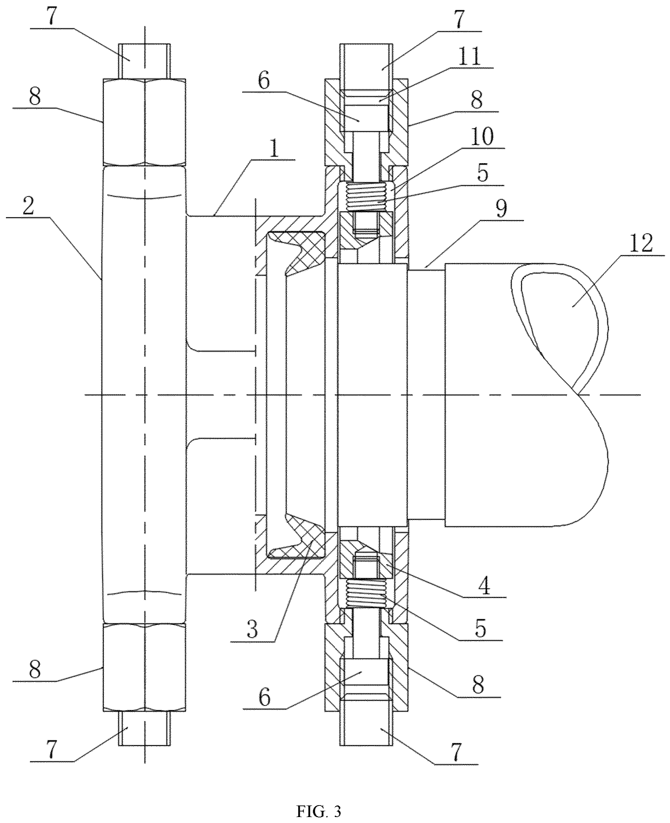

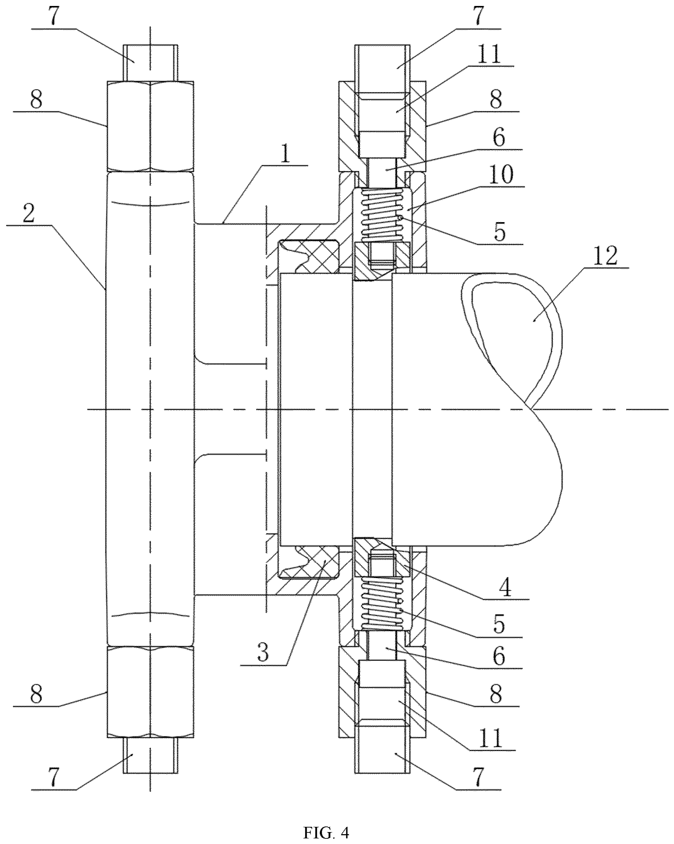

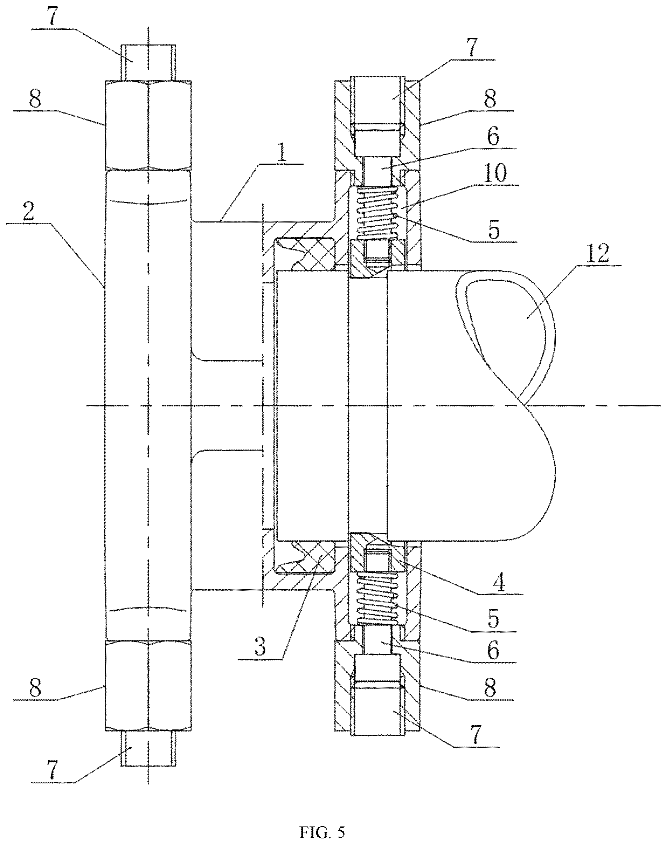

The present invention provides a quick-installation equal-radius straight-way joint structure, including the shell I 1, the shells II 2, the positioning blocks 8, the support pins 6, the first springs 5, and the retaining rings 4. The specific structures are shown in FIGS. 1-5. The shell I 1 is a hollow cylindrical structure arranged horizontally, and left and right side surfaces of the shell I 1 are each concentrically provided with the hollow cylindrical shell II 2, which are integrally formed. An inner diameter of each shell II 2 is matched with an outer diameter of the pipeline 12, and an interior of each shell II 2 is communicated with an interior of the shell I 1. An outer diameter of each shell II 2 is larger than an outer diameter of the shell I 1, and a section of the two after integral forming is I-shaped, and then form an equal-radius straight-way structure.

As shown in FIGS. 1-5, the arc-shaped slots 10 are coaxially embedded in a middle position of each shell II 2 relative to upper and lower sides of an inner circumferential surface of the shell II 2, and each arc-shaped slot 10 is communicated with an interior of the corresponding shell II 2. A width of each arc-shaped slot 10 is smaller than a lateral width of the corresponding shell II 2, an inner diameter of each arc-shaped slot 10 is corresponding to an inner diameter of the corresponding shell II 2, and an outer diameter of each arc-shaped slot 10 is smaller than an outer diameter of the corresponding shell II 2.

According to the present invention, the annular groove 9 is coaxially embedded in an outer circumferential surface of the pipeline 12 near an end of the pipeline 12, and the arc-shaped retaining ring 4 matched with the groove 9 is coaxially arranged in each arc-shaped slot 10. As shown in FIGS. 1-5, the positioning blocks 8 are respectively screwed at upper and lower ends of an outer circumferential surface of each shell II 2, and the internal threaded hole 11 is vertically embedded in a middle of an outer surface of each positioning block 8 to ensure that the internal threaded hole 11 does not extend out of an inner surface of the corresponding positioning block 8. Each positioning block 8 has a cylindrical structure and is arranged along a radial direction of the shell II 2, an inner surface of each positioning block 8 is coaxially attached with a circular boss, and each circular boss is integrally formed with the corresponding positioning block 8. A diameter of each circular boss is smaller than a diameter of the corresponding positioning block 8, and an external thread is also provided on an outer circumferential surface of each circular boss. Each positioning block 8 is screwed and fixed with a corresponding position of an outer circumferential surface of the corresponding shell II 2 through the boss, and it is necessary to ensure that the bosses extend into the corresponding arc-shaped slot 10, that is, the bosses are communicated with the arc-shaped slot 10 and respectively arranged at intervals outside the corresponding retaining ring 4.

According to the present invention, the T-shaped support pin 6 is coaxially and slidably sleeved in the internal threaded hole 11 of each positioning block 8. As shown in FIGS. 1-5, a small-diameter end of each support pin 6 extends into the corresponding arc-shaped slot 10 along the radial direction of the shell II 2 and is screwed and fixed with a middle position of an outer arc surface of the corresponding retaining ring 4. The first spring 5 is coaxially sleeved between the positioning block 8 and the corresponding retaining ring 4 on the small-diameter end of each support pin 6, and after the pipeline 12 is coaxially sleeved in the corresponding shell II 2, the retaining ring 4 is clamped in the corresponding groove 9 by a spring force of the first spring 5, thereby connecting the pipeline 12 with the corresponding shell II 2. A diameter of the small-diameter end of each support pin 6 is smaller than a diameter of the corresponding circular boss, the internal threaded hole 11 is a stepped hole, and a diameter of a large-diameter end of the T-shaped support pin 6 is larger than a diameter of a small-diameter section of the internal threaded hole 11, that is, the sliding, towards a center of the corresponding shell II 2, of the support pin 6 is limited by the positioning block 8. An outer diameter of the large-diameter end of each support pin 6 is smaller than an inner diameter of a large-diameter section of the corresponding internal threaded hole 11, and it is necessary to ensure that the internal threaded hole 11 does not interfere with the sliding of the support pin 6 in the corresponding positioning block 8 along the radial direction of the shell II 2.

As shown in FIGS. 1-5, a width of each retaining ring 4 is matched with a diameter of the corresponding circular boss and a width of the groove 9 of the pipeline 12, and it is necessary to ensure that after the positioning block 8 is detached from the corresponding shell II 2, the retaining ring 4 is detached from the groove 9 in the corresponding shell II 2 with the positioning block 8 through the support pin 6. An inner arc surface of each retaining ring 4 is an inner conical surface matched with the outer circumferential surface of the pipeline 12 (the groove 9 and its connecting part). When the pipeline 12 is inserted into the shell II 2, a diameter of the retaining ring 4 on a side far away from the shell I 1 is larger than the outer diameter of the pipeline 12, and a diameter of the retaining ring 4 on a side adjacent to the shell I 1 is smaller than the outer diameter of the pipeline 12. When the pipeline 12 is coaxially inserted into the corresponding shell II 2, the retaining ring 4 is pushed in a direction far away from the pipeline 12 to compress the first spring 5. When the groove 9 moves with the pipeline 12 to a position relative to the retaining ring 4, the retaining ring 4 is clamped in the groove 9 of the pipeline 12 by the spring force of the first spring 5.

As shown in FIGS. 1-5, the sealing rings 3 matched with the pipeline 12 are also symmetrically and coaxially sleeved inside the shell I 1 at left and right intervals, a setting position of each sealing ring 3 needs to ensure that an end of the pipeline 12 is coaxially inserted into the corresponding sealing ring 3 when the retaining ring 4 is clamped in the groove 9.

As shown in FIGS. 1-5, the positioning bolt 7 matched with the internal threaded hole 11 is coaxially screwed in the internal threaded hole 11 of each positioning block 8, and after the pipeline 12 is inserted into the shell II 2, the support pin 6 is limited by an abutting contact of each positioning bolt 7 with an end face of the large-diameter end of the corresponding support pin 6, thus ensuring that the retaining ring 4 is always clamped in the groove 9 of the pipeline 12 and ensuring the stability of the connection between the pipeline 12 and the joint.

The technical solutions of the present invention are not only suitable for equal-radius straight-way joints, but also suitable for differential-radius straight-way joints, 90-degree elbows, 45-degree elbows, positive tee joints and the like, and their principles are similar to that of the present application, so it is not repeated here.

The present invention provides a use method of the quick-installation equal-radius straight-way joint structure, as shown in FIGS. 1-5, including the following steps:
Step 1: the positioning bolt 7 is loosened to generate a gap between the positioning bolt 7 and the end face of the large-diameter end of the corresponding support pin 6 and ensure that the support pin 6 is allowed to slide within the gap.

Step 2: an end of the pipeline 12 adjacent to the groove 9 is inserted into the corresponding shell II 2 concentrically, where the outer circumferential surface of the pipeline 12 is subjected to contact with the inner arc surface of the corresponding retaining ring 4, the corresponding retaining ring 4 is squeezed with a continuous insertion of the pipeline 12, and the retaining ring 4 is subjected to move in a direction of approaching the corresponding positioning block 8 along the radial direction of the shell II 2 to compress the corresponding first spring 5.

Step 3: when the end of the pipeline 12 is coaxially inserted into the corresponding sealing ring 3, the groove 9 of the pipeline 12 is subjected to directly face the retaining ring 4, and under the spring force of the first spring 5, the retaining ring 4 is subjected to move in a direction of approaching the pipeline 12 along the radial direction of the shell II 2 and to be clamped in the groove 9 of the pipeline 12, to connect the pipeline 12 with the corresponding shell II 2.

Step 4: the positioning bolt 7 is tightened to make the positioning bolt 7 abut against the end face of the large-diameter end of the corresponding support pin 6 and limit the support pin 6, to ensure that the retaining ring 4 is always clamped in the groove 9 of the pipeline 12.

Step 5: when the pipeline 12 needs to be detached, the positioning bolt 7 is loosened, and then the positioning block 8 is loosened, so that the pipeline 12 is allowed to be detached from the corresponding shell II 2 with the positioning block 8; specifically, the retaining ring 4 is detached from the groove 9 of the corresponding shell II 2 with the positioning block 8 through the support pin 6 to detach the pipeline 12 from the corresponding shell II 2.

The above-mentioned embodiment is only a description of the preferred embodiment of the present invention, and does not limit the concept and scope of the present invention. Under the premise of not departing from the design concept of the present invention, various modifications and improvements made by ordinary engineers and technicians in the field should fall within the scope of protection of the present invention, and the technical contents of the present invention have all been recorded in the technical requirements.

## Claims

1. A quick-installation equal-radius straight-way joint structure, comprising a shell I, shells II, positioning blocks, support pins, first springs, and retaining rings; wherein the shell I is a hollow cylindrical structure arranged horizontally, and left and right side surfaces of the shell I are each concentrically provided with the hollow cylindrical shell II, which are integrally formed; arc-shaped slots are coaxially embedded in a middle position of each shell II relative to upper and lower sides of an inner circumferential surface of the shell II, and each arc-shaped slot is communicated with an interior of the corresponding shell II; the positioning blocks are respectively screwed at upper and lower ends of an outer circumferential surface of each shell II, and an internal threaded hole is vertically embedded in a middle of an outer surface of each positioning block to ensure that the internal threaded hole does not extend out of an inner surface of the corresponding positioning block; an annular groove is coaxially embedded in an outer circumferential surface of the pipeline near an end of the pipeline, and an arc-shaped retaining ring matched with the groove is coaxially arranged in each arc-shaped slot; a T-shaped support pin is coaxially and slidably sleeved in the internal threaded hole of each positioning block, a small-diameter end of each support pin extends into the corresponding arc-shaped slot along the radial direction of the shell II and is screwed and fixed with a middle position of an outer arc surface of the corresponding retaining ring; the first spring is coaxially sleeved between the positioning block and the corresponding retaining ring on the small-diameter end of each support pin, and after the pipeline is coaxially sleeved in the corresponding shell II, the retaining ring is clamped in the corresponding groove by a spring force of the first spring, thereby connecting the pipeline with the corresponding shell II.

2. The quick-installation equal-radius straight-way joint structure according to claim 1, wherein an inner diameter of each shell II is matched with an outer diameter of the pipeline, and an interior of each shell II is communicated with an interior of the shell I; an outer diameter of each shell II is larger than an outer diameter of the shell I, and a section of the two after integral forming is I-shaped, and then form an equal-radius straight-way structure.

3. The quick-installation equal-radius straight-way joint structure according to claim 1, wherein a width of each arc-shaped slot is smaller than a lateral width of the corresponding shell II, an inner diameter of each arc-shaped slot is corresponding to an inner diameter of the corresponding shell II, and an outer diameter of each arc-shaped slot is smaller than an outer diameter of the corresponding shell II.

4. The quick-installation equal-radius straight-way joint structure according to claim 1, wherein each positioning block has a cylindrical structure and is arranged along a radial direction of the shell II, an inner surface of each positioning block is coaxially attached with a circular boss, and each circular boss is integrally formed with the corresponding positioning block; a diameter of each circular boss is smaller than a diameter of the corresponding positioning block, and an external thread is also provided on an outer circumferential surface of each circular boss; each positioning block is screwed and fixed with a corresponding position of an outer circumferential surface of the corresponding shell II through the boss, and it is necessary to ensure that the bosses extend into the corresponding arc-shaped slot and are respectively arranged at intervals outside the corresponding retaining ring.

5. The quick-installation equal-radius straight-way joint structure according to claim 4, wherein a diameter of the small-diameter end of each support pin is smaller than a diameter of the corresponding circular boss, sliding, towards a center of the corresponding shell II, of the support pin is limited by the positioning block; an outer diameter of a large-diameter end of each support pin is smaller than a diameter of the corresponding internal threaded hole, and it is necessary to ensure that the internal threaded hole does not interfere with sliding of the support pin in the corresponding positioning block along the radial direction of the shell II.

6. The quick-installation equal-radius straight-way joint structure according to claim 4, wherein a width of each retaining ring is matched with a diameter of the corresponding circular boss and a width of the groove of the pipeline, and it is necessary to ensure that after the positioning block is detached from the corresponding shell II, the retaining ring is detached from the corresponding shell II with the positioning block through the support pin; an inner arc surface of each retaining ring is an inner conical surface matched with the outer circumferential surface of the pipeline, a diameter of the retaining ring on a side far away from the shell I is larger than an outer diameter of the pipeline, and a diameter of the retaining ring on a side adjacent to the shell I is smaller than the outer diameter of the pipeline; when the pipeline is coaxially inserted into the corresponding shell II, the retaining ring is pushed in a direction far away from the pipeline to compress the first spring, when the groove moves with the pipeline to a position relative to the retaining ring, the retaining ring is clamped in the groove of the pipeline by the spring force of the first spring.

7. The quick-installation equal-radius straight-way joint structure according to claim 6, wherein sealing rings matched with the pipeline are also symmetrically and coaxially sleeved inside the shell I at left and right intervals, a setting position of each sealing ring needs to ensure that an end of the pipeline is coaxially inserted into the corresponding sealing ring when the retaining ring is clamped in the groove.

8. The quick-installation equal-radius straight-way joint structure according to claim 6, further comprising a positioning bolt, wherein the positioning bolt matched with the internal threaded hole is coaxially screwed in the internal threaded hole of each positioning block, the support pin is limited by an abutting contact of each positioning bolt with an end face of a large-diameter end of the corresponding support pin, thus ensuring that the retaining ring is always clamped in the groove of the pipeline.

9. A use method of the quick-installation equal-radius straight-way joint structure according to any one of claims 1 to 8, comprising the following steps:
step 1: loosening the positioning bolt to generate a gap between the positioning bolt and the end face of the large-diameter end of the corresponding support pin and ensure that the support pin is allowed to slide within the gap;
step 2: inserting an end of the pipeline adjacent to the groove into the corresponding shell II concentrically, wherein the outer circumferential surface of the pipeline is subjected to contact with the inner arc surface of the corresponding retaining ring, the corresponding retaining ring is squeezed with a continuous insertion of the pipeline, and the retaining ring is subjected to move in a direction of approaching the corresponding positioning block along the radial direction of the shell II to compress the corresponding first spring;
step 3: when the end of the pipeline is coaxially inserted into the corresponding sealing ring, subjecting the groove of the pipeline to directly face the retaining ring, and subjecting, under the spring force of the first spring, the retaining ring to move in a direction of approaching the pipeline along the radial direction of the shell II and to be clamped in the groove of the pipeline, to connect the pipeline with the corresponding shell II;
step 4: tightening the positioning bolt to make the positioning bolt abut against the end face of the large-diameter end of the corresponding support pin and limit the support pin, to ensure that the retaining ring is always clamped in the groove of the pipeline; and
step 5: when the pipeline needs to be detached, loosening the positioning bolt, and then loosening the positioning block, so that the pipeline is allowed to be detached from the corresponding shell II with the positioning block; detaching the retaining ring from the corresponding shell II with the positioning block through the support pin to detach the pipeline from the corresponding shell II.
